# EUROPÄISCHE PATENTSCHRIFT

(11) **EP 1 740 379 B1**
(45) Veröffentlichungstag und Bekanntmachung des Hinweises auf die Patenterteilung: **16.12.2009**
(21) Anmeldenummer: 05733677.8
(22) Anmeldetag: 18.04.2005
(51) Int. Cl.: B32B 27/40, B32B 17/04, B62D 25/06

(54) **VERBUNDBAUTEIL FÜR EINE FAHRZEUGKAROSSERIE, INSBESONDERE EIN FAHRZEUGDACH, SOWIE HERSTELLUNGSVERFAHREN DAFÜR**
COMPOSITE COMPONENT FOR A VEHICLE BODY, IN PARTICULAR A VEHICLE ROOF, AND PRODUCTION METHOD FOR SAID COMPONENT
PIECE COMPOSITE POUR UNE CARROSSERIE DE VEHICULE, NOTAMMENT POUR UN TOIT DE VEHICULE, ET SON PROCEDE DE PRODUCTION

(30) Priorität: 20.04.2004 DE 102004019051
(43) Veröffentlichungstag der Anmeldung: 10.01.2007
(73) Patentinhaber: Webasto AG, 82131 Stockdorf (DE); Bayer MaterialScience AG, 51368 Leverkusen (DE)
(72) Erfinder: KIESEWETTER, Frank, 82110 Germering (DE); WEGENER, Dirk, 40789 Monheim a. Rhein (DE); WOKÖCK, Jan, 83043 Bad Aibling (DE); MIES, Detlef, 50189 Elsdorf (DE)
(74) Vertreter: Schwan - Schwan - Schorer
(86) Internationale Anmeldenummer: PCT/DE2005/000705
(87) Internationale Veröffentlichungsnummer: WO 2005/102697

(56) Entgegenhaltungen:
- EP-A- 1 319 503
- EP-A- 1 346 902
- DE-A1- 10 207 295

## Beschreibung

Die vorliegende Erfindung betrifft ein Verbundbauteil für eine Fahrzeugkarosserie, insbesondere ein Fahrzeugdach gemäß dem Oberbegriff von Anspruch 1 sowie ein entsprechendes Herstellungsverfahren.

In der EP-A- 1 346 902 ist ein Fahrzeugverbundbauteil offenbart, welches als Trägerschicht eine Wabenstruktur aufweist, und welches ferner zwei faserverstärkte Schichten aufweist, die zu beiden Seiten der Trägerschicht auf die Wabenstruktur aufgebracht sind.

Ein gattungsgemäßes Verbundbauteil ist beispielsweise aus der DE 102 02 911 C1 bekannt, wobei in dem Bereich an der Grenzfläche zwischen der Außenhaut und der Trägerschicht in der Trägerschicht eine Grenzschicht ausgebildet ist, innerhalb welcher der Faseranteil bezüglich des außerhalb der Grenzschicht liegenden Bereichs der Trägerschicht erhöht ist, um ein Verbundbauteil mit hoher Temperaturstabilität zu schaffen. Die Trägerschicht besteht aus mittels Langfaserinjektion verstärktem Polyurethan, während die Grenzschicht ebenfalls aus mittels Langfaserinjektion verstärktem Polyurethan besteht oder durch Einlegen einer zusätzlichen Glasfasermatte gebildet wird.

Weitere gattungsgemäße Verbundbauteile, die ein Dachmodul für ein Fahrzeug bilden und mit einer faserverstärkten Trägerschicht aus Polyurethan mit homogener Faserverteilung versehen sind, sind beispielsweise aus der DE 102 05 295 A1, DE 102 07 295 A1, US 6,378, 208 B1 sowie EP 0 995 667 A1 und EP 1 384 655 A2 bekannt, wobei in den letztgenannten beiden Schriften auch die Verstärkung einer Polyurethanschicht mittels Einlegen von Geweben, Gewirken und Vliesen als Armierung erwähnt ist.

Nachteilig bei den genannten Verbundbauteilen ist, dass der zur Erzielung einer hinreichenden Festigkeit der Trägerschicht erforderliche Faseranteil zu einer ungleichmäßigen Oberfläche der Außenhaut, insbesondere nach thermischer Belastung, führen kann.

Es ist Aufgabe der vorliegenden Erfindung, ein Verbundbauteil für eine Fahrzeugkarosserie, insbesondere ein Fahrzeugdach, zu schaffen, bei welchem sowohl eine gute Oberflächenqualität der Außenhaut als auch eine hinreichende Festigkeit der Trägerschicht erzielt werden. Ferner soll ein Herstellungsverfahren für ein solches Verbundbauteil geschaffen werden.

Diese Aufgabe wird erfindungsgemäß gelöst durch ein Verbundbauteil gemäß Anspruch 1 sowie ein Herstellungsverfahren gemäß Anspruch 17. Bei der erfindungsgemäßen Lösung ist vorteilhaft, dass, da an der von der Außenhaut abgewandten Seite der Trägerschicht eine faserverstärkte Verstärkungsschicht vorgesehen ist, die einen höheren Faseranteil aufweist als die Trägerschicht, einerseits der Faseranteil der Trägerschicht verringert werden kann, um eine gute Oberflächenqualität der Außenhaut auch nach thermischer Belastung sicherzustellen, während andererseits die Verstärkungsschicht dennoch für eine hinreichende mechanische Stabilität des Verbundbauteils sorgt.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine Schnittansicht durch ein Verbundbauteil gemäß einer ersten Ausführungsform; und
- Fig. 2: eine Schnittansicht durch ein Verbundbauteil gemäß einer zweiten Ausführungsform.

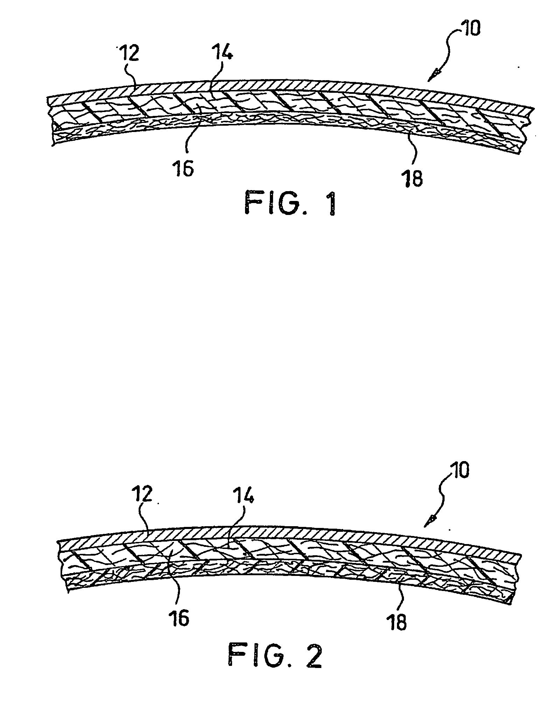

In Fig. 1 ist eine Schnittansicht durch ein Verbundbauteil 10 für eine Fahrzeugkarosserie gezeigt, das eine faserfreie Außenhaut 12, eine mit Fasern 14 verstärkte Trägerschicht 16 auf der Innenseite der Außenhaut 12 sowie eine faserverstärkte Verstärkungsschicht 18 auf der von der Außenhaut abgewandten Seite der Trägerschicht 16 aufweist. Die Trägerschicht 16 dient dabei zur Verstärkung der Außenhaut 12, während die Verstärkungsschicht 18 zur Verstärkung der Trägerschicht 16 dient.

Vorzugsweise handelt es sich bei dem Verbundbauteil 10 um einen Teil eines Fahrzeugdaches, insbesondere eines sogenannten Dachmoduls. Dabei bildet die Außenhaut 12 dann die Außenseite einer festen Dachfläche.

Grundsätzlich weist die Verstärkungsschicht 18 einen höheren Faseranteil als die Trägerschicht 16 auf. Bei dem Beispiel von Fig. 1 wird dies dadurch erzielt, dass die Verstärkungsschicht 18 im wesentlichen als bei der Herstellung auf die Trägerschicht 16 aufgelegte Glasfasermatte ausgebildet ist.

Das Basismaterial der Trägerschicht 16 ist vorzugsweise Polyurethan, welches mittels Langfaserinjektion verstärkt ist.

Vorzugsweise ist die Außenhaut 12 mit der Trägerschicht 16 hinterspritzt oder hinterfüttert.

Bei der Außenhaut 12 handelt es sich beispielsweise um eine faserfreie Kunststoffschicht oder um ein dünnes Aluminium- oder Stahlblech

Vorzugsweise sind die Fasern 14 innerhalb der Trägerschicht 16 im wesentlichen homogen verteilt, wobei der Faseranteil in der Trägerschicht 16 vorzugsweise weniger als 10 Gew.% beträgt.

Die Glasfasermatte der Verstärkungsschicht 18 weist vorzugsweise ein Flächengewicht zwischen 225 und 450 g/m² auf, wobei die Glasfasermatte von dem Polyurethan der Trägerschicht 16 durchtränkt ist.

Bei den Fasern 14 handelt es sich vorzugsweise um Glasfasern.

Die Herstellung des Verbundbauteils 10 kann beispielsweise dadurch erfolgen, dass die Außenhaut 12 in ein Unterwerkzeug eingelegt wird, eine Glasfasermatte an dem entsprechenden Oberwerkzeug befestigt wird, die Trägerschicht 16 mittels Langfaserinjektion in Polyurethan auf der Außenhaut 12 aufgebracht wird, das Ober- und Unterwerkzeug geschlossen werden, das Verbundbauteil 10 ausgehärtet wird und anschließend aus dem Werkzeug entnommen wird.

In Fig. 2 ist eine abgewandelte Ausführungsform gezeigt, wobei die Verstärkungsschicht 18 nicht von einer eingelegten Glasfasermatte gebildet wird, sondern ebenfalls von einer mittels Langfaserinjektion verstärkten Polyurethanschicht gebildet wird, wobei jedoch der Faseranteil höher eingestellt wird als in der Trägerschicht 16. Beispielsweise kann der Faseranteil der Verstärkungsschicht 18 mehr als 30 Gew.% betragen, wobei die Fasern 14 innerhalb der Verstärkungsschicht 18 vorzugsweise im wesentlichen homogen verteilt sind.

In diesem Fall können im Prinzip die Trägerschicht 16 und die Verstärkungsschicht 18 in einem Arbeitsgang hergestellt werden, wobei der Faseranteil in dem von der Außenhaut 12 abgewandten Bereich der auf die Außenhaut 12 aufgebrachten Schicht entsprechend erhöht wird, um die Verstärkungsschicht 18 zu bilden.

### Bezugszeichenliste

- 10: Verbundbauteil
- 12: Außenhaut
- 14: Fasern
- 16: Trägerschicht
- 18: Verstärkungsschicht

## Patentansprüche

1. Verbundbauteil für eine Fahrzeugkarosserie, insbesondere ein Fahrzeugdach, mit einer faserfreien Außenhaut (12), und einer faserverstärkten Trägerschicht (16), welche an der Innenseite der Außenhaut angebracht ist, um die Außenhaut zu verstärken, **dadurch gekennzeichnet, dass** an der von der Außenhaut (12) abgewandten Seite der Trägerschicht (16) eine faserverstärkte Verstärkungsschicht (18) vorgesehen ist, um die Trägerschicht zu verstärken, wobei die Verstärkungsschicht einen höheren Faseranteil aufweist als die Trägerschicht.

2. Verbundbauteil gemäß Anspruch 1, **dadurch gekennzeichnet, dass** es sich bei dem Verbundbauteil (10) um einen Bestandteil eines Dachmoduls handelt.

3. Verbundbauteil gemäß Anspruch 1 oder 2, **dadurch gekennzeichnet, dass** das Basismaterial der Trägerschicht (16) Polyurethan ist.

4. Verbundbauteil gemäß Anspruch 3, **dadurch gekennzeichnet, dass** die Trägerschicht (16) mittels Langfaserinjektion hergestellt ist.

5. Verbundbauteil gemäß einem der vorhergehenden Ansprüche, **dadurch gekennzeichnet, dass** die Außenhaut (12) mit der Trägerschicht (16) hinterspritzt oder hinterfüttert ist.

6. Verbundbauteil gemäß einem der vorhergehenden Ansprüche, **dadurch gekennzeichnet, dass** es sich bei der Außenhaut (12) um eine Kunststoffschicht oder um eine Lage aus Aluminium oder Stahl handelt.

7. Verbundbauteil gemäß einem der vorhergehenden Ansprüche, **dadurch gekennzeichnet, dass** der Faseranteil innerhalb der Trägerschicht (16) im wesentlichen homogen verteilt ist.

8. Verbundbauteil gemäß einem der vorhergehenden Ansprüche, **dadurch gekennzeichnet, dass** der Faseranteil der Trägerschicht (16) weniger als 10 Gewichts% beträgt.

9. Verbundbauteil gemäß einem der vorhergehenden Ansprüche, **dadurch gekennzeichnet, dass** die Verstärkungschicht (18) von einer Glasfasermatte gebildet wird.

10. Verbundbauteil gemäß Anspruch 9, **dadurch gekennzeichnet, dass** die Glasfasermatte ein Flächengewicht zwischen 225 und 450 g/m² aufweist.

11. Verbundbauteil gemäß Anspruch 9 oder 10, **dadurch gekennzeichnet, dass** die Glasfasermatte von Polyurethan durchtränkt ist.

12. Verbundbauteil gemäß einem der Ansprüche 1 bis 8, **dadurch gekennzeichnet, dass** das Basismaterial der Verstärkungsschicht (18) Polyurethan ist.

13. Verbundbauteil gemäß Anspruch 12, **dadurch gekennzeichnet, dass** die Verstärkungsschicht (18) mittels Langfaserinjektion hergestellt ist.

14. Verbundbauteil gemäß einem der vorhergehenden Ansprüche, **dadurch gekennzeichnet, dass** der Faseranteil innerhalb der Verstärkungsschicht (18) im wesentlichen homogen verteilt ist.

15. Verbundbauteil gemäß einem der vorhergehenden Ansprüche, **dadurch gekennzeichnet, dass** der Faseranteil der Verstärkungsschicht (18) mehr als 30 Gewichts% beträgt.

16. Verbundbauteil gemäß einem der vorhergehenden Ansprüche, **dadurch gekennzeichnet, dass** es sich bei den Fasern (14) um Glasfasern handelt.

17. Verfahren zum Herstellen eines Verbundbauteils (10) für eine Fahrzeugkarosserie, insbesondere ein Fahrzeugdach, wobei eine faserfreie Außenhaut (12) zur Verstärkung an ihrer Innenseite mit einer faserverstärkten Trägerschicht (16) versehen wird, **dadurch gekennzeichnet, dass** die Trägerschicht (16) an ihrer von der Außenhaut (12) abgewandten Seite zur Verstärkung mit einer faserverstärkte Verstärkungsschicht (18) versehen wird, wobei die Verstärkungsschicht einen höheren Faseranteil aufweist als die Trägerschicht.

18. Verfahren gemäß Anspruch 17, **dadurch gekennzeichnet, dass** die Außenhaut (12) in ein Unterwerkzeug eingelegt wird, eine Glasfasermatte an einem Oberwerkzeug befestigt wird, die Trägerschicht (16) auf der Außenhaut aufgebracht wird, das Ober- und Unterwerkzeug geschlossen wird, das Verbundbauteil ausgehärtet wird, und das Verbundbauteil (10) aus dem Ober- und Unterwerkzeug entnommen wird.

19. Verfahren gemäß Anspruch 18, **dadurch gekennzeichnet, dass** die Trägerschicht (16) mittels Langfaserinjektion in Polyurethan hergestellt wird.

20. Verfahren gemäß Anspruch 17, **dadurch gekennzeichnet, dass** die Außenhaut (12) in ein Werkzeug eingelegt wird, die Trägerschicht (16) mittels Langfaserinjektion in Polyurethan auf der Außenhaut aufgebracht wird, wobei in dem von der Außenhaut abgewandten Bereich ein Gemisch mit einem höheren Faseranteil abgelegt wird, das Werkzeug geschlossen wird, das Verbundbauteil (10) ausgehärtet wird, und das Verbundbauteil aus dem Werkzeug entnommen wird.

## Claims

1. Composite member for a vehicle body, particularly a vehicle roof, comprising a fiber-free outer skin (12) and a fiber-reinforced support layer (16), which is provided at the inner side of the outer skin for reinforcing the outer skin, **characterized in that**, for reinforcing the support layer (16), a fiber-reinforced reinforcing layer (18) is provided at the side of the support layer (16) facing away from the outer skin (12), and wherein the reinforcing layer comprises a higher fiber concentration than the support layer.

2. Composite member according to claim 1, **characterized in that** the composite member (10) is part of a roof module.

3. Composite member according to claim 1 or 2, **characterized in that** the base material of the support layer (16) is polyurethane.

4. Composite member according to claim 3, **characterized in that** the support layer (16) is produced by long fiber injection.

5. Composite member according to any one of the preceding claims, **characterized in that** the outer skin (12) is rear injected or rear lined with the support layer (16).

6. Composite member according to any one of the preceding claims, **characterized in that** the outer skin (12) is a plastic layer or a layer of aluminum or steel.

7. Composite member according to any one of the preceding claims, **characterized in that** the fiber concentration within the support layer (16) is distributed substantially homogeneously.

8. Composite member according to any one of the preceding claims, **characterized in that** the fiber concentration of the support layer (16) is less than 10 weight percent.

9. Composite member according to any one of the preceding claims, **characterized in that** the reinforcing layer (18) is formed by a glass fiber mat.

10. Composite member according to claim 9, **characterized in that** the glass fiber mat has a mass per unit area between 225 and 450 g/m².

11. Composite member according to claim 9 or 10, **characterized in that** the glass fiber mat is saturated with polyurethane.

12. Composite member according to any one of claims 1 to 8, **characterized in that** the base material of the reinforcing layer (18) is polyurethane.

13. Composite member according to claim 12, **characterized in that** the reinforcing layer (18) is produced by long fiber injection.

14. Composite member according to any one of the preceding claims, **characterized in that** the fiber concentration within the reinforcing layer (18) is distributed substantially homogeneously.

15. Composite member according to any one of the preceding claims, **characterized in that** the fiber concentration of the reinforcing layer (18) is more than 30 weight percent.

16. Composite member according to any one of the preceding claims, **characterized in that** the fibers (14) are glass fibers.

17. Method for manufacturing a composite member (10) for a vehicle body, particularly a vehicle roof, wherein a fiber-free outer skin (12) is provided at its inner side with a fiber-reinforced support layer (16) for reinforcement, **characterized in that** the support layer (16) is provided at its side facing away from the outer skin (12) with a fiber-reinforced reinforcing layer (18) providing for reinforcement, wherein the reinforcing layer comprises a higher fiber concentration than the support layer.

18. Method according to claim 17, **characterized in that** the outer skin (12) is laid into a lower mould, a glass fiber mat is fixed at an upper mould, the support layer (16) is applied onto the outer skin, the upper mould and the lower mould are closed, the composite member is hardened and the composite member (10) is removed from the upper mould and the lower mould.

19. Method according to claim 18, **characterized in that** the support layer (16) is produced by long fiber injection in polyurethane.

20. Method according to claim 17, **characterized in that** the outer skin (12) is laid into a tool, the support layer (16) is applied onto the outer skin by long fiber injection into polyurethane, wherein, at the region facing away from the outer skin, a mixture with a higher fiber concentration is deposited, the tool is closed, the composite member (10) is hardened and the composite member is removed from the tool.

## Revendications

1. Pièce composite pour une carrosserie de véhicule, notamment pour un toit de véhicule, comprenant une enveloppe extérieure (12) exempte de fibres et une couche de substrat (16) renforcée par des fibres, qui est implantée à la face intérieure de ladite enveloppe extérieure pour renforcer ladite enveloppe extérieure, **caractérisée par le fait qu'**une couche de renforcement (18) armée de fibres est prévue sur la face de la couche de substrat (16) qui est tournée à l'opposé de l'enveloppe extérieure (12), afin de renforcer ladite couche de substrat, sachant que ladite couche de renforcement présente un plus grand pourcentage de fibres que ladite couche de substrat.

2. Pièce composite selon la revendication 1, **caractérisée par le fait que** ladite pièce composite (10) se présente comme un élément constitutif d'un module de toit.

3. Pièce composite selon la revendication 1 ou 2, **caractérisée par le fait que** le matériau de base de la couche de substrat (16) est du polyuréthane.

4. Pièce composite selon la revendication 3, **caractérisée par le fait que** la couche de substrat (16) est produite par injection de fibres allongées.

5. Pièce composite selon l'une des revendications précédentes, **caractérisée par le fait que** la couche de substrat (16) est appliquée contre l'enveloppe extérieure (12) par injection sous-jacente ou par garnissage sous-jacent.

6. Pièce composite selon l'une des revendications précédentes, **caractérisée par le fait que** l'enveloppe extérieure (12) se présente comme une couche de matière plastique, ou comme une strate d'aluminium ou d'acier.

7. Pièce composite selon l'une des revendications précédentes, **caractérisée par le fait que** le pourcentage de fibres est réparti, pour l'essentiel, de manière homogène à l'intérieur de la couche de substrat (16).

8. Pièce composite selon l'une des revendications précédentes, **caractérisée par le fait que** le pourcentage de fibres de la couche de substrat (16) représente moins de 10 % en poids.

9. Pièce composite selon l'une des revendications précédentes, **caractérisée par le fait que** la couche de renforcement (18) est formée d'un mat en verre textile.

10. Pièce composite selon la revendication 9, **caractérisée par le fait que** le mat en verre textile présente un poids superficiel compris entre 225 et 450 g/m².

11. Pièce composite selon la revendication 9 ou 10, **caractérisée par le fait que** le mat en verre textile est imprégné de polyuréthane.

12. Pièce composite selon l'une des revendications 1 à 8, **caractérisée par le fait que** le matériau de base de la couche de renforcement (18) est du polyuréthane.

13. Pièce composite selon la revendication 12, **caractérisée par le fait que** la couche de renforcement (18) est produite par injection de fibres allongées.

14. Pièce composite selon l'une des revendications précédentes, **caractérisée par le fait que** le pourcentage de fibres est réparti, pour l'essentiel, de manière homogène à l'intérieur de la couche de renforcement (18).

15. Pièce composite selon l'une des revendications précédentes, **caractérisée par le fait que** le pourcentage de fibres de la couche de renforcement (18) représente plus de 30 % en poids.

16. Pièce composite selon l'une des revendications précédentes, **caractérisée par le fait que** les fibres (14) se présentent comme des fibres de verre.

17. Procédé de production d'une pièce composite (10) pour une carrosserie de véhicule, notamment pour un toit de véhicule, dans lequel : une enveloppe extérieure (12) exempte de fibres est munie à sa face intérieure, en vue du renforcement, d'une couche de substrat (16) renforcée par des fibres, **caractérisé par le fait que** ladite couche de substrat (16) est pourvue sur sa face tournée à l'opposé de l'enveloppe extérieure (12), en vue du renforcement, d'une couche de renforcement (18) armée de fibres, ladite couche de renforcement présentant un plus grand pourcentage de fibres que ladite couche de substrat.

18. Procédé selon la revendication 17, **caractérisé par le fait que** l'enveloppe extérieure (12) est placée dans un outil inférieur ; un mat en verre textile est fixé à un outil supérieur ; la couche de substrat (16) est implantée sur ladite enveloppe extérieure ; les outils supérieur et inférieur sont fermés ; la pièce composite est soumise à durcissement intégral ; et ladite pièce composite (10) est prélevée desdits outils supérieur et inférieur.

19. Procédé selon la revendication 18, **caractérisé par le fait que** la couche de substrat (16) est produite par injection de fibres allongées en polyuréthane.

20. Procédé selon la revendication 17, **caractérisé par le fait que** l'enveloppe extérieure (12) est placée dans un outil ; la couche de substrat (16) est implantée sur ladite enveloppe extérieure par injection de fibres allongées en polyuréthane, un mélange à fort pourcentage de fibres étant déposé dans la région tournée à l'opposé de ladite enveloppe extérieure; l'outil est fermé ; la pièce composite (10) est soumise à durcissement intégral ; et ladite pièce composite est prélevée dudit outil.
